Europäisches Patentamt

European Patent Office

Office européen des brevets

(19)

(11) **EP 0 984 254 A1**

(12) **DEMANDE DE BREVET EUROPEEN**

(43) Date de publication:
**08.03.2000  Bulletin 2000/10**

(51) Int. Cl.⁷: **G01K 11/32**

(21) Numéro de dépôt: **98116774.5**

(22) Date de dépôt: **04.09.1998**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur:
**Talltec Technologies Holdings S.A.
2012 Luxembourg (LU)**

(72) Inventeur: **Bouamra,Mohamed
67000 Strasbourg (FR)**

(74) Mandataire:
**Ravenel, Thierry Gérard Louis et al
I C B,
Ingénieurs Conseils en Brevets SA,
7, rue des Sors
2074 Marin (CH)**

(54) **Capteur de température à fibre optique**

(57)     L'invention concerne un capteur de température comprenant une source optique à fibre optique (10, 30) pour délivrer un signal optique, une première ligne de transmission à fibre optique (12, 32) reliée à la source optique, une partie sensible de fibre optique (14, 34) reliée à la première ligne de transmission à fibre optique, une seconde ligne de transmission à fibre optique (16, 36) reliée à la partie sensible de fibre optique et un circuit de détection optique et de traitement (18, 38) relié à la seconde ligne de transmission à fibre optique pour recevoir et analyser le signal optique transmis par la source optique et traversant la fibre optique, ledit capteur étant caractérisé en ce que ladite partie sensible de fibre optique est montée sur un support plan et courbée sur une longueur déterminée (N1) et avec une amplitude de courbure déterminée (A1).

FIG.1

EP 0 984 254 A1

## Description

Domaine de la technique

La présente invention se rapporte au domaine des capteurs de température et plus particulièrement elle concerne un capteur de température à fibre optique de faible encombrement.

Art antérieur

Actuellement, les capteurs de températures à fibre optique se répartissent en deux catégories : la première catégorie concerne les capteurs optiques dits extrinsèques et la seconde ceux dits intrinsèques. Dans les capteurs optiques extrinsèques, la fibre optique est un élément passif assurant une simple fonction de ligne de transmission et elle doit dès lors être parfaitement insensible à la grandeur physique à mesurer. Au contraire, pour les capteurs optiques intrinsèques, c'est la fibre optique elle même qui est l'élément sensible à la grandeur à mesurer, laquelle agit directement sur les caractéristiques physiques propres de la fibre.

On connaît, notamment par le brevet français FR 2 664 695, un capteur de températures à fibre optique de type intrinsèque dans lequel la fibre optique de type multimode qui comporte une longueur de liaison aller (depuis la source optique) et une longueur de liaison retour (vers le circuit de détection et d'exploitation) est conformée dans sa partie sensible selon un enroulement de courbure déterminée et à plusieurs tours disposé dans le milieu à surveiller. Ce capteur repose sur les propriétés de biréfringence d'une fibre optique courbée. On sait, en effet, que la courbure d'une fibre en induisant des contraintes dans cette fibre provoque des pertes de propagation et donc une baisse de l'intensité lumineuse transmise.

Toutefois, un tel capteur de température présente encore de nombreux inconvénients. Tout d'abord, la configuration de la partie sensible de la fibre optique, enroulée sur plusieurs tours, influe sur l'encombrement et la durée de vie du capteur. Chaque fibre optique présente en effet un rayon critique de courbure Rc pour lequel il y a fracture de la fibre (par exemple pour une fibre toute silice de rayon externe r, ce rayon de courbure critique est égal à 100 r/ 3.3). Dès lors, l'encombrement du capteur est imposé par cette dimension minimale et la durée de vie du capteur sera d'autant plus faible que le diamètre d'enroulement se rapprochera de ce diamètre critique de fracture. Ensuite, le recours à une fibre optique multimode engendre des conditions d'exploitation particulièrement sévères. En effet, une telle fibre comporte un très grand nombre de modes de propagation, lesquels dépendent fortement à la fois des caractéristiques opto-géométriques de la fibre (indice et rayon de coeur, profil d'indice, ouverture numérique), des conditions initiales d'injection de la source optique (angle solide et longueur d'onde d'émission, distance source-fibre, alignement axial et angulaire), du conditionnement de la ligne de transmission (parcours rectiligne ou courbe), et de la température ambiante. Dès lors, il est très difficile d'obtenir des distributions modales identiques d'un capteur à l'autre. Enfin, dans de tels guides optiques courbés, la réponse en température est directement liée à la distribution modale en entrée de fibre et il est admis que seules les premières longueurs de courbures contribuent efficacement à produire des pertes de transmission, les pertes se stabilisant en effet quasiment au delà d'une certaine longueur.

Objet et définition de l'invention

La présente invention a donc pour objet un capteur de température à fibre optique de faible encombrement présentant néanmoins une grande linéarité et une grande étendue de mesure et agencé de façon à permettre son exploitation industrielle.

Ces buts sont atteints par un capteur de température à fibre optique comprenant, une source optique pour délivrer un signal optique, une première ligne de transmission à fibre optique reliée à la source optique, une partie sensible de fibre optique reliée à la première ligne de transmission à fibre optique, une seconde ligne de transmission à fibre optique reliée à la partie sensible de fibre optique et un circuit de détection optique et de traitement relié à la seconde ligne de transmission à fibre optique pour recevoir et analyser le signal optique transmis par la source optique et traversant la fibre optique, caractérisé en ce que ladite partie sensible de fibre optique est montée sur un support plan et courbée sur une longueur déterminée (N1) et avec une amplitude de courbure déterminée (A1). De préférence, la partie sensible est courbée périodiquement (T1).

Par cette structure particulièrement simple où la partie sensible de fibre optique est conformée selon un guide d'onde optique présentant des caractéristiques parfaitement déterminées, il est possible d'obtenir des mesures de températures particulièrement précises. En outre, l'utilisation d'une fibre optique offre à un tel capteur une immunité totale vis à vis des perturbations d'origine électromagnétiques ainsi qu'une sécurité totale en milieu sensible notamment explosif.

Dans une variante de réalisation, ce capteur de température à fibre optique peut être dépourvu d'une seconde ligne de transmission qui est alors remplacée par un élément réflectif plan relié directement à la partie sensible de fibre optique, laquelle est montée sur un support plan et courbée périodiquement (T1) sur une longueur déterminée (N1) et avec une amplitude de courbure déterminée (A1).

Selon la nature de la fibre optique utilisée pour former la partie sensible, la période de courbure T1 est choisie de façon à satisfaire :

soit l'inégalité suivante :

$$2\pi/T1 \geq 1/\rho^2 kn_1 + 2\sqrt{\Delta}/\rho \text{ pour une fibre à saut d'indice}$$

soit l'égalité suivante :

$$T1 = \rho\pi\sqrt{(2/\Delta)} \text{ pour une fibre à gradient d'indice parabolique}$$

où $k = 2\pi/\lambda$ est le module du vecteur d'onde et $\lambda$ la longueur d'onde optique ; $n_1$ l'indice du matériau de coeur de la fibre optique ; $\Delta = n_1 - n_2/n_2$ est la différence relative des indices des matériaux de coeur et de gaine de la fibre optique ; et $\rho$ est le rayon de coeur de la fibre optique.

Selon un mode de réalisation préférentiel, la partie sensible de la fibre optique du capteur de température selon l'invention est précédée et suivie d'un tronçon de fibre, respectivement amont et aval, monté sur un support plan et courbé périodiquement (T2, T3) sur une longueur déterminée (N2, N3) et avec une amplitude de courbure déterminée (A2, A3). De préférence, ces longueurs déterminées des tronçons de fibres optiques amont et aval sont identiques.

Les périodes de courbure déterminées des tronçons de fibres optiques amont et aval sont déterminées de façon à obtenir un couplage optimal entre tous les modes de propagation guidés sans provoquer de couplages avec les modes rayonnants.

Avantageusement, la fibre optique est une fibre multimode et est constituée de matériaux de coeur et de gaines (dont une gaine externe) d'indices décroissants est entourée, au niveau de sa partie sensible, d'au moins une couche supplémentaire d'un matériau d'indice inférieur à l'indice de la gaine externe de la fibre et aux propriétés optiques vis à vis de la température différentes de celles du coeur de la fibre optique. Selon une première réalisation, la couche de matériau supplémentaire peut présenter un indice optique décroissant avec la température lorsque le matériau de coeur présente lui-même un indice optique constant ou croissant avec la température. Selon une seconde réalisation, cette couche de matériau supplémentaire peut présenter un indice optique croissant avec la température lorsque le matériau de coeur présente lui-même un indice optique constant ou décroissant avec la température.

De préférence, les première et seconde lignes de transmission à fibre optique sont entrelacées pour former un réseau de courbures de faible amplitude et de période déterminée Cette période déterminée est choisie de manière à obtenir un couplage optimal entre les modes de propagation guidés sans provoquer de couplages entre les modes rayonnants.

Avantageusement, la source optique est choisie parmi les trois sources suivants : une source de lumière cohérente de type laser, une source de lumière partiellement cohérente de type diode superluminescente ou une source de lumière faiblement cohérente de type diode luminescente.

Les première et seconde lignes de transmission à fibre optique et la partie sensible de fibre optique forment de préférence une fibre optique unique. Toutefois, ces première et seconde lignes de transmission à fibre optique peuvent aussi être formées de deux fibres optiques distinctes reliées par un guide d'onde optique formant la partie sensible de fibre optique.

La présente invention concerne également un dispositif de mesure de température muni de deux capteurs de température tels que décrits précédemment, ces deux capteurs disposés l'un près de l'autre étant alimentés par une source optique commune et délivrant chacun un signal optique de sortie au niveau respectivement d'un premier et d'un second détecteurs. Dans un premier mode de réalisation, la partie sensible de fibre optique de l'un de ces deux capteurs est rendue insensible à la température afin de permettre la délivrance au niveau du détecteur correspondant d'un signal de référence invariable avec la température. Dans un second mode de réalisation, les parties sensibles de fibre optique de ces deux capteurs ont des matériaux avec des coefficients de variation d'indice avec la température de signes opposés afin de permettre la délivrance au niveau des premier et second détecteurs de signaux optiques ayant des variations opposées avec la température, la somme de ces deux signaux constituant un signal de référence invariable avec la température. Ce second mode de réalisation permet notamment d'obtenir une référence pour s'affranchir des grandeurs perturbatrices.

Brève description des dessins

D'autres caractéristiques et avantages de la présente invention ressortiront mieux de la description suivante, faite à titre indicatif et non limitatif, en regard des dessins annexés, sur lesquels :

- la figure 1 est un premier exemple de réalisation d'un capteur optique de température selon l'invention,
- la figure 2 montre une variante de réalisation du capteur de la figure 1,
- la figure 3 montre un premier exemple de configuration de mesure intégrant le capteur de la figure 1,
- la figure 4 est un second exemple de réalisation d'un capteur optique selon l'invention,
- la figure 5 montre une variante de réalisation du capteur optique de la figure 4, et
- la figure 6 montre un second exemple de configuration de mesure intégrant le capteur de la figure 4.

Description détaillée d'un mode de réalisation préférentiel

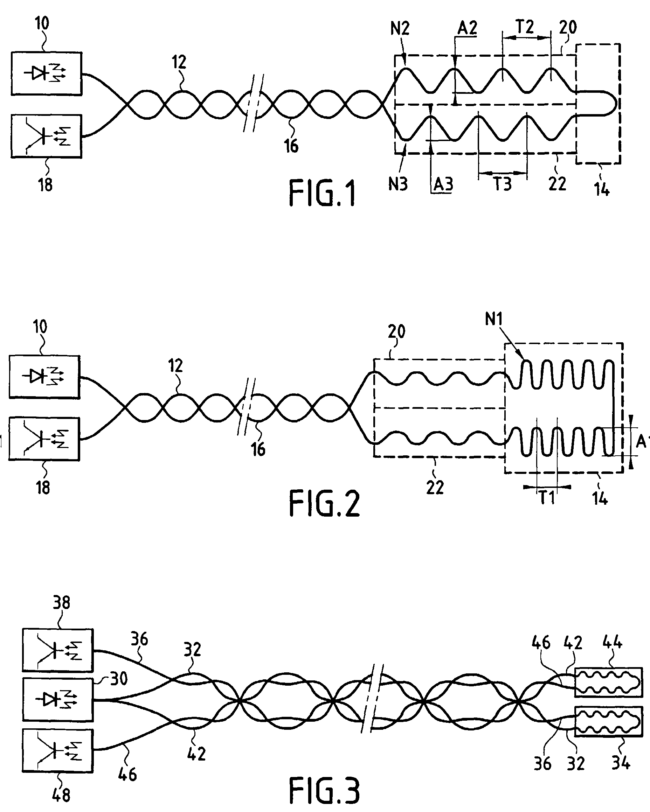

Un premier exemple de réalisation d'un capteur de température selon l'invention est illustré sur la figure 1. Ce capteur comporte une source optique 10, une ligne de transmission aller à fibre optique 12, une partie sensible de fibre optique 14, une ligne de transmission retour à fibre optique 16 et un circuit de détection et de traitement 18. Les lignes de transmission aller et retour et la partie sensible sont formées avantageusement dans une fibre optique unique. Toutefois, Ces lignes de transmission peuvent aussi être formées de deux fibres optiques distinctes reliées à la partie sensible formée alors par un guide d'onde optique.

La source optique 10 d'émission d'un signal optique peut être une source de lumière cohérente spatialement de type laser, ou simplement partiellement cohérente de type diode superluminescente ou même faiblement cohérente de type diode luminescente.

La ligne de transmission aller 12 est constituée par une fibre optique multimodes rendue intrinsèquement peu sensible à la température du fait de la sensible égalité (en amplitude et signe) des coefficients de variation d'indice avec ta température des matériaux de coeur et de gaine constitutifs de cette fibre optique. Cette condition est notamment vérifiée avec une fibre classique dite 《toute silice》 dont les matériaux de coeur et de gaine sont formés par un même matériau. De préférence, afin d'assurer une meilleure excitabilité modale et de s'affranchir au mieux des conditions d'injection au niveau de la source optique, cette fibre est choisie du type à gradient d'indice parabolique. Toutefois, l'emploi d'une fibre à saut d'indice peut aussi être envisagée. De même, afin d'éviter l'utilisation de connecteurs optiques ou de coupleurs à lentilles qui présentent l'inconvénient d'une mauvaise reproductibilité lors de leur démontage/remontage, une extrémité de cette ligne de transmission est fixée solidairement à la source optique 10, par exemple par collage ou à l'issue d'un processus de fusion, et éventuellement au travers d'un dispositif de collimation (non représenté).

La ligne de transmission retour 16 présente une configuration analogue à celle de la ligne aller, une extrémité de cette ligne étant alors fixée solidairement à l'élément de détection 18, éventuellement au travers d'un dispositif de focalisation (non représenté).

Avantageusement, les deux lignes de transmission aller et retour sont entrelacées l'une par rapport à l'autre de manière à former un réseau de courbures de faible amplitude (pour limiter les pertes dues aux modes rayonnants de ta fibre) et de période choisie pour que l'ensemble des modes de propagation guidés par la fibre optique soient excités. On réalise ainsi un couplage optimal de ces modes guidés et on parle alors de distribution modale d'équilibre. L'ensemble source-ligne de transmission aller et élément de détection-ligne de transmission retour peut être monté dans un boîtier et ensuite être soudé et fixé à une carte électronique de traitement commune.

Le circuit de détection et de traitement 18 comporte un élément photodétecteur opto-électronique de conversion du signal optique reçu en un signal électrique et des éléments de traitement électronique de ce signal pour en déduire la température à évaluer. Bien entendu, comme il sera vu plus avant, un référençage du capteur sera réalisé au niveau de ces éléments de traitement pour s'affranchir des différentes grandeurs perturbatrices susceptibles de perturber les mesures comme les effets de courbures sur les lignes de transmission, les diverses fluctuations d'origines thermiques ou les variations de température non désirées dans les lignes de transmission par exemple.

La partie sensible de fibre optique 14 destinée à assurer la mesure de température par contact ou immersion dans le milieu à surveiller est conformée en guide d'onde optique multimode et disposé selon un réseau de courbures de structure plane à contraintes de déformations nulles.

La constante de propagation d'un mode $\beta$ dans une fibre optique multimode quelconque, définit par ses deux paramètres entiers $\mu$ et $\nu$ décrivant respectivement la dépendance radiale et azimutale du champ électromagnétique qui lui est associé, répond à l'équation suivante :

$$\beta_{\mu,\nu} = kn_1[1-2\Delta[\alpha+2/\alpha*(2\mu+\nu)/(\rho^2k^2n_1^2\lambda)]^{\alpha/\alpha+2}]^{0.5}$$

où $k = 2\pi/\lambda$ est le module du vecteur d'onde et $\lambda$ la longueur d'onde optique ; $n_1$ l'indice du matériau de coeur de la fibre optique ; $\Delta=n_1-n_2/n_2$ est la différence relative des indices des matériaux de coeur et de gaine de la fibre optique ; $\alpha$ est un coefficient qui défini le profil spatial de l'indice de réfraction de la fibre ($\alpha= 2$ correspond à une fibre à gradient d'indice parabolique) et $\rho$ est le rayon de coeur de la fibre optique.

Les conditions aux limites imposées aux modes de propagation guidés dans la fibre doivent satisfaire la rela-

tion :

$$0 < (2\mu+\nu)^2 < \Delta(\rho kn_1)^2 \alpha/\alpha+2$$

La présence d'un défaut présentant une périodicité T telle que :

$$\Delta\beta = 2\pi/T$$

peut coupler deux modes ou groupes de modes satisfaisant à la régie de sélection liée au couplage du plus proche voisin.

Ainsi, pour une fibre à saut d'indice ($\alpha \rightarrow \infty$), l'espacement entre les modes voisins est donné par :

$$\Delta\beta_{(\mu,\nu)(\mu,\nu+1)} = 1/(\rho kn_1)^2[1+2(2\mu+\nu)]$$

d'après les bornes des modes guidés :

$$1/\rho^2 kn_1 \leq \Delta\beta \leq 1/\rho^2 kn_1 + 2\sqrt{\Delta}/\rho$$

Ainsi, si un défaut mécanique périodique de fréquence $2\pi/T$ est appliqué à une fibre optique à saut d'indice, il peut être observé :

- soit aucun couplage si :

$$2\pi/T \leq 1/\rho^2 kn_1$$

- soit un couplage entre les seuls modes guidés si :

$$1/\rho^2 kn_1 \leq 2\pi/T \leq 1/\rho^2 kn_1 + 2\sqrt{\Delta}/\rho \qquad (1)$$

- soit un couplage entre modes guidés et modes rayonnants si :

$$2\pi/T \geq 1/\rho^2 kn_1 + 2\sqrt{\Delta}/\rho \qquad (2)$$

Dans le cas d'une fibre optique à gradient d'indice parabolique ($\alpha = 2$), l'espacement entre modes est indépendant de leur ordre. Ainsi, tout défaut de période T couplera l'ensemble des modes de propagation guidés et rayonnants avec une intensité liée notamment à l'amplitude de ce défaut (l'adoption de pas de microcourbures multiples de T permet également d'obtenir de pics d'atténuation):

$$\Delta\beta_{(\mu,\nu)(\mu,\nu+1)} = 2\pi/T = \sqrt{(2\Delta)}/\rho$$

soit encore

$$T = \rho\pi\sqrt{(2/\Delta)} \qquad (3)$$

où $\Delta = n_1 - n_2/n_2$ est la différence relative des indices des matériaux de coeur et de gaine de la fibre optique et $\rho$ est le rayon de coeur de la fibre optique.

L'application des relations (2) ou (3) permet de définir la période des microcourbures T1 et l'amplitude des déformations du réseau A1 en fonction de la sensibilité et de l'étendue de mesure recherchées. Le nombre N1 de périodes du réseau est essentiellement définie par la surface de contact disponible avec le milieu à surveiller. Au minimum, notamment dans le cas d'une mesure ponctuelle comme illustré à la figure 1, ce nombre pourra être inférieur à l'unité, une demi-période pouvant alors suffire pour réaliser la partie sensible du capteur et obtenir une demi-boucle de retour nécessaire à la liaison avec la ligne de transmission retour. La figure 2 est un autre exemple de capteur dans lequel la partie sensible comporte six périodes, les tronçons amont et aval ayant chacun trois périodes.

Deux techniques de réalisation de la partie sensible de la fibre optique sont actuellement envisageables. Une première technique connue consiste à créer un guide d'onde optique spécifique en intégrant directement la fibre optique dans un substrat de silicium ou de verre conformé préalablement. La seconde technique utilise un processus thermique de mise en forme de la fibre optique. Ce processus peut être inséré soit dans le cycle de fabrication de la fibre soit lors de l'élaboration de la partie sensible du capteur. Dans ce dernier cas, la fibre est dénudée sur une certaine longueur de son revêtement mécanique et éventuellement de sa ou ses gaines optiques puis fixé sur un support plan munie de courbures préétablies. L'ensemble est ensuite porté à une température suffisante pour assurer un ramollissement des matériaux puis, une fois que la fibre a pris sa forme microcourbée, cette partie dénudée est revêtue d'une ou plusieurs couches de matériaux d'indice décroissants, optiquement compatible avec l'indice du coeur de la fibre mais présentant des propriétés de variations vis à vis de la température qui sont différentes de celles du coeur. De préférence, un dernier matériau pouvant aussi faire office de boîtier donnera à la partie sensible du capteur sa résistance et sa tenue mécanique définitive.

On aura noté que ce procédé de mise en forme permet d'obtenir une fibre optique microcourbée à contraintes de déformations nulles, ce qui garantie une longue durée de vie pour le capteur comme son affranchissement des effets élasto-optiques.

Selon une caractéristique préférentielle de l'invention, la partie sensible de fibre optique 16 est précédée et suivie par deux tronçons identiques de fibre optique 20, 22 rendues insensibles à la température et disposés également sur un support plan selon un réseau déterminé de courbures. Le rôle du premier tronçon, ou tronçon aller, est d'optimiser la distribution modale pour obtenir une distribution modale d'équilibre en entrée de la partie sensible et le rôle du second tronçon, ou tronçon retour, est de reconstituer cette distribution modale d'équilibre en sortie de cette partie sensible. Ainsi, il est possible de garantir un comportement identique des lignes de transmission aller et retour et donc une meilleure reproductibilité de réponse du capteur.

La période T2, T3 est fixée à partir de la relation (1) en égalant les termes du milieu et de droite de cette inégalité assurant ainsi un couplage optimal (sans pertes) entre tous les modes de propagation guidés dans la fibre sans provoquer de couplages avec les modes rayonnants. Toutefois, une telle égalité ne pouvant être parfaite, il peut s'opérer tout de même un couplage avec les modes rayonnants d'où la nécessité de prévoir une valeur d'amplitude correspondante A2, A3 suffisamment faible pour limiter les pertes. Le nombre N2, N3 de périodes est choisi comme précédemment en fonction de la surface de contact disponible.

Le fonctionnement du capteur de température selon l'invention est basé sur le principe de la modulation d'intensité (dite aussi d'amplitude) dans une fibre optique. Il repose sur la mesure de la puissance recueillie en sortie de la fibre optique qui est fonction des variations d'ouverture numérique (ON) par effets thermiques.

Ainsi, la mesure de température peut mettre en oeuvre deux principes complémentaires : le premier résulte d'une modulation positive de l'ouverture numérique de la fibre optique et le second, inverse, résulte d'une modulation négative de cette ouverture. Le choix de l'un ou l'autre de ces deux modes de fonctionnement dépendra essentiellement du choix qui sera opéré pour les matériaux composant la fibre optique, plus précisément pour les coefficients de variation en fonction de la température (en valeur et en signe) des indices du coeur et de la ou des gaines optiques de la fibre.

Dès lors, pour obtenir une modulation positive de l'ouverture numérique, il suffit de choisir pour le coeur de la fibre optique un matériau optiquement transmissif et présentant un indice constant ou croissant avec la température (par exemple la silice) alors que, pour les gaines optiques et notamment la gaine la plus externe, il suffit de choisir un matériau d'indice optique compatible avec le coeur mais décroissant avec la température (par exemple le silicone). Dans ce mode de fonctionnement du capteur, une augmentation de la température entraînera une augmentation de l'ouverture numérique, la valeur minimale du signal optique correspondant à son extinction étant obtenue pour la température de fonctionnement la plus basse. Par contre, pour obtenir une modulation négative de l'ouverture numérique, on choisira des matériaux aux propriétés optiques inverses des précédentes. Dans ce mode de fonctionnement, une augmentation de la température entraînera une diminution de l'ouverture numérique, la température de fonctionnement la plus basse permettant alors d'obtenir la valeur maximale du signal optique correspondant à sa saturation.

Ces deux températures limites définissent l'étendue de mesure du capteur à l'intérieur de laquelle la réponse du capteur peut être considérée comme linéaire en fonction de la température. On notera qu'un calcul de ces deux limites inférieure et supérieure de température peut être effectué simplement et très classiquement à partir de la détermination de l'angle de réfraction limite d'une fibre courbée qui peut s'exprimer en fonction du rayon de courbure de cette fibre et de l'angle de réfraction limite d'une fibre rectiligne.

Bien entendu, avant toute utilisation, il conviendra de procéder à un calibrage du capteur afin de limiter les erreurs de mesure liées classiquement à ta dispersion des caractéristiques des composants utilisés dans la fabrication de la fibre optique et à leurs fluctuations temporelles. Un processus simple d'étalonnage pourra ainsi être mis en oeuvre au moment de l'installation du capteur dans le milieu à surveiller, par exemple en procédant à une mesure pour une température de référence donnée à laquelle correspond une réponse étalon du capteur.

En outre, afin de s'affranchir valablement des variations du signal recueilli autres que celles liées à la température, il est classique de procéder à un référençage du capteur. Sa fonction est de détecter les variations de signal liées à des grandeurs perturbatrices autres que l'effet de température à mesurer, par exemple les effets de courbures sur les lignes de transmission.

La figure 3 illustre le dispositif de mesure de température en résultant avec deux structures identiques à celle du capteur de température défini précédemment et alimentées par une source optique commune 30. On rappellera que ce capteur comporte, outre cette source optique commune, une première ligne de transmission aller 32, une première partie sensible 34, une première ligne de transmission retour 36, un premier détecteur 38. Il est adjoint à ce premier capteur un second ayant une seconde ligne de transmission aller 42 fixé solidairement à la source optique commune 30, une seconde partie sensible 44, une seconde ligne de transmission retour 46 et un second détecteur 48. En outre, l'ensemble des lignes de transmission est conformé selon un entrelacement périodique des fibres optiques de manière à conserver en tout point de ces lignes des distributions modales identiques.

Dans un premier mode de réalisation, la seconde partie sensible 44 qui est, comme les lignes de transmission 32, 36 ; 42, 46, rendue intrinsèquement insensible à la température, constitue un capteur de référence pour la mesure qui est effectuée avec la première partie sensible 34 (laquelle est placée dans le milieu à surveiller). Ainsi, avec cette configuration, toutes les variations (grandeurs perturbatrices) autres que celles résultant de la température qui agiront pareillement sur chacune des deux structures de capteur peuvent être annulées au moyen d'une boucle de contre-réaction (non représentée) appliquée à la source optique. En sortie des deux détecteurs du dispositif de mesure seront disponibles d'une part un signal de mesure et d'autre part un signal de référence invariable avec la température.

Dans un second mode de réalisation, les première et seconde parties sensibles 34, 44 sont positionnées aussi près que possible l'une près de l'autre dans le milieu à surveiller, mais les fibres optiques les composant sont choisies avec des matériaux ayant des coefficients de variation d'indice avec la température de préférence de même amplitude mais de signes opposés. Un choix adéquat des rayons de courbure et des gains d'amplification pour les deux capteurs permettront de compenser les différences inhérentes aux matériaux et d'obtenir une étendue de mesure linéaire. En sortie des détecteurs seront disponibles un premier signal de mesure croissant avec la température (fonctionnement en modulation positive) et un second signal de mesure décroissant avec la température (fonctionnement en modulation négative), la somme de ces deux signaux (sensiblement constante vis à vis de la température) constituant un signal de référence invariable avec la température. Comme précédemment, l'analyse des signes de variations des deux signaux de mesure couplée avec une boucle de contre-réaction permettra de discriminer les effets de la température de ceux des autres grandeurs perturbatrices. En effet, toute variation de même signe des deux signaux sera attribuée à des effets non liés à la température, ce qui est par exemple le cas lorsque les lignes de transmission sont soumises à des courbures provoquant une baisse du signal en sortie de la fibre optique ou lorsque l'intensité de la source optique fluctue.

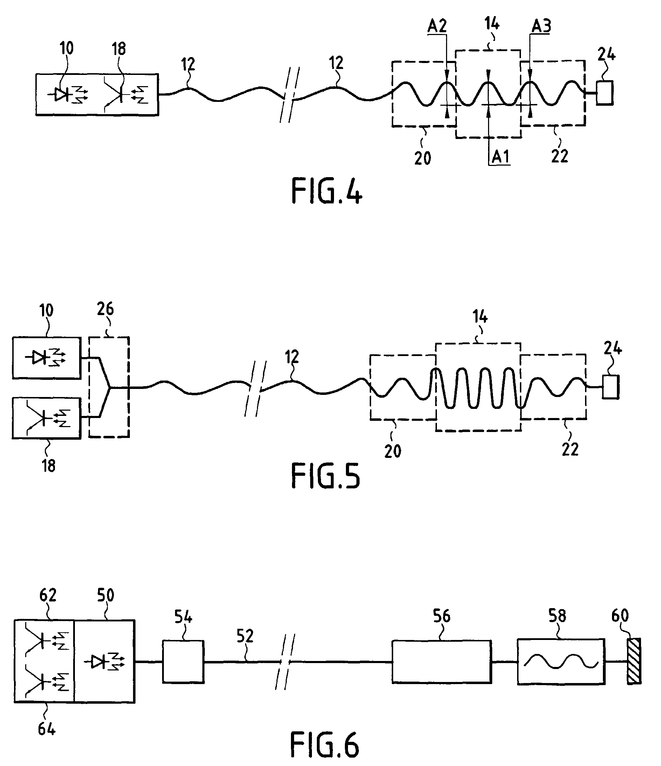

La figure 4 montre un second exemple de réalisation d'un capteur de température à fibre optique selon l'invention dans une configuration en réflexion. On retrouve dans ce capteur la source optique avec sa diode émettrice 10, la ligne de transmission aller à fibre optique 12 dont une extrémité est fixée solidairement à cette source optique, la partie sensible de la fibre optique 14 qui prolonge la ligne de transmission et qui est intercalée entre les deux tronçons de fibre 20, 22 et le circuit de détection et de traitement comportant une cellule photodétectrice 18 et qui, dans cette configuration, peut être intégré à la source optique (une séparation de la diode émettrice et de la cellule photodétectrice est bien évidemment possible moyennant le recours à un coupleur 27 ou tout autre dispositif séparateur comme l'illustre la figure 5). Par contre, la ligne de transmission retour est absente de cette configuration et est remplacée par un élément réfléchissant plan, par exemple un miroir 24.

Cette configuration de capteur qui permet de diminuer l'encombrement général du capteur ainsi que les pertes de transmission liées à la ligne retour autorise bien entendu des modes de fonctionnement identiques à ceux décrits précédemment en regard de la figure 1.

Un dispositif de référençage particulièrement bien adapté à cette configuration en réflexion est maintenant décrit en regard de la figure 6. Une source optique 50 spatialement cohérente (laser ou diode super luminescente) est utilisée pour injecter un signal optique dans la ligne de transmission à fibre optique 52 au travers d'un élément optique diffractif plan 54. Un réseau de diffraction (par exemple réseau de Bragg 56) placé juste avant la partie sensible de la fibre optique 58 fait rétroréfléchir une partie du spectre du signal optique émis qui, insensible à la température, sert alors de référence. La partie du signal optique transmise par le réseau de diffraction va parcourir deux fois la partie sensible 58 du fait de la présence du miroir 60. Le signal de retour de spectre différent du premier empruntera ensuite le même chemin que le signal de référence. Juste avant la source optique 50, l'élément optique diffractif 54 permettra de discriminer les deux signaux optiques de mesure et de référence, chacun étant détecté par un détecteur distinct 62, 64.

Le capteur à fibre optique selon l'invention présente de très nombreux avantages. Citons, par exemple, une très grande linéarité, une importante étendue de mesure dans une plage de température de -200 à 1000°C, une très grande résolution de l'ordre de $10^{-4}$°C, une très grande durée de vie, une sensibilité régulièrement répartie du fait du rétablissement constant des distributions modales, un encombrement très faible, une fixation particulièrement aisée de par la structure plane de la partie sensible, une bonne reproductibilité, un coût de production modéré et une facilité de mise en oeuvre.

Notons encore, que cette configuration est particulièrement bien adaptée dans le cas où l'on cherche à déterminer une valeur moyenne de température à partir de différentes zones du milieu à surveiller. Il suffit en effet de placer une partie sensible sur chacune de ces zones et de les relier entres elles par des lignes de transmission, une source optique et un détecteur étant suffisant pour assurer l'émission et la réception du signal optique traversant ce réseau de capteurs.

**Revendications**

1.  Capteur de température à fibre optique comprenant, une source optique (10, 30) pour délivrer un signal optique, une première ligne de transmission à fibre optique (12, 32) reliée à la source optique, une partie sensible de fibre optique (14, 34) reliée à la première ligne de transmission à fibre optique, une seconde ligne de transmission à fibre optique (16, 36) reliée à la partie sensible de fibre optique et un circuit de détection optique et de traitement (18, 38) relié à la seconde ligne de transmission à fibre optique pour recevoir et analyser le signal optique transmis par la source optique et traversant la fibre optique, caractérisé en ce que ladite partie sensible de fibre optique est montée sur un support plan et courbée sur une longueur déterminée (N1) et avec une amplitude de courbure déterminée (A1).

2.  Capteur de température selon la revendication 1, caractérisé en ce que ladite partie sensible de fibre optique est courbée périodiquement (T1).

3.  Capteur de température à fibre optique comprenant, une source optique (10, 50) pour délivrer un signal optique, une première ligne de transmission à fibre optique (12, 52) reliée à la source optique, une partie sensible de fibre optique (14, 54) reliée à la première ligne de transmission à fibre optique, un élément réflectif plan (24, 60) reliée à la partie sensible de fibre optique et un circuit de détection optique et de traitement (18 ; 62, 64) également relié à la première ligne de transmission à fibre optique pour recevoir et analyser le signal optique transmis par la source optique et traversant la fibre optique avant et après réflexion par l'élément réflectif, caractérisé en ce que ladite partie sensible de fibre optique est montée sur un support plan et courbée périodiquement (T1) sur une longueur déterminée (N1) et avec une amplitude de courbure déterminée (A1).

4.  Capteur de température selon la revendication 2 ou la revendication 3 dont la partie sensible est à saut d'indice, caractérisé en ce que ladite période de courbure est choisie de façon à satisfaire à l'inégalité suivante :

$$2\pi/T1 \geq 1/\rho^2 kn_1 + 2\sqrt{\Delta}/\rho$$

    où $k = 2\pi/\lambda$ est le module du vecteur d'onde et $\lambda$ la longueur d'onde optique ; $n_1$ l'indice du matériau de coeur de la fibre optique ; $\Delta = n_1 - n_2/n_2$ est la différence relative des indices des matériaux de coeur et de gaine de la fibre optique ; et $\rho$ est le rayon de coeur de la fibre optique.

5.  Capteur de température selon la revendication 2 ou la revendication 3 dont la partie sensible est à gradient d'indice parabolique, caractérisé en ce que ladite période de courbure est choisie de façon à satisfaire à l'égalité suivante (ou des valeurs multiples de cette égalité) :

$$T1 = \rho\pi\sqrt{(2/\Delta)}$$

    où $\Delta = n_1 - n_2/n_2$ est la différence relative des indices des matériaux de coeur et de gaine de la fibre optique et $\rho$ est le rayon de coeur de la fibre optique.

6.  Capteur de température selon la revendication 1 ou la revendication 3, caractérisé en ce que ladite partie sensible de la fibre optique est précédée et suivie d'un tronçon de fibre, respectivement amont et aval (20, 22), monté sur un support plan et courbé périodiquement (T2, T3) sur une longueur déterminée (N2, N3) et avec une amplitude de courbure déterminée (A2, A3).

7.  Capteur de température selon la revendication 6, caractérisé en ce que lesdites longueurs déterminées des tronçons de fibres optiques amont et aval sont identiques.

8.  Capteur de température selon la revendication 6, caractérisé en ce que lesdites périodes de courbure déterminées des tronçons de fibres optiques amont et aval sont déterminées de façon à obtenir un couplage optimal entre tous les modes de propagation guidés sans provoquer de couplages avec les modes rayonnants.

9.  Capteur de température selon la revendication 1 ou la revendication 3, caractérisé en ce que ladite fibre optique est une fibre multimode.

**10.** Capteur de température selon la revendication 9, caractérisé en ce que ladite fibre optique constituée de matériaux de coeur et de gaines (dont une gaine externe) d'indices décroissants est entourée, au niveau de sa partie sensible, d'au moins une couche supplémentaire d'un matériau d'indice inférieur à l'indice de la gaine externe de la fibre et aux propriétés optiques vis à vis de la température différentes de celles du coeur de la fibre optique.

**11.** Capteur de température selon la revendication 10, caractérisé en ce que ladite couche de matériau supplémentaire présente un indice optique décroissant avec la température lorsque le matériau de coeur présente lui-même un indice optique constant ou croissant avec la température.

**12.** Capteur de température selon la revendication 10, caractérisé en ce que ladite couche de matériau supplémentaire présente un indice optique croissant avec la température lorsque le matériau de coeur présente lui-même un indice optique constant ou décroissant avec la température.

**13.** Capteur de température selon la revendication 1, caractérisé en ce que lesdites première et seconde lignes de transmission à fibre optique sont entrelacées pour former un réseau de courbures de faible amplitude et de période déterminée.

**14.** Capteur de température selon la revendication 13, caractérisé en ce que ladite période déterminée est choisie de manière à obtenir un couplage optimal entre l'ensemble des modes de propagation guidés sans provoquer de couplage avec les modes rayonnants.

**15.** Capteur de température selon la revendication 1 ou la revendication 3, caractérisé en ce que ladite source optique est choisie parmi les trois sources suivants : une source de lumière cohérente de type laser, une source de lumière partiellement cohérente de type diode superluminescente ou une source de lumière faiblement cohérente de type diode luminescente.

**16.** Capteur de température selon la revendication 1, caractérisé en ce que ladite source optique est fixée solidairement à une extrémité de la première ligne de transmission à fibre optique (12, 32, 42) et ledit élément de détection est fixé solidairement à une extrémité de la seconde ligne de transmission à fibre optique (16, 36, 46).

**17.** Capteur de température selon la revendication 1 ou la revendication 3, caractérisé en ce que les première et seconde lignes de transmission à fibre optique et la partie sensible de fibre optique forment une fibre optique unique.

**18.** Capteur de température selon la revendication 1 ou la revendication 3, caractérisé en ce que les première et seconde lignes de transmission à fibre optique sont formées de deux fibres optiques distinctes reliées par un guide d'onde optique formant la partie sensible de fibre optique.

**19.** Dispositif de mesure de température muni de deux capteurs de température selon l'une quelconque des revendications 1 à 18, ces deux capteurs disposés l'un près de l'autre étant alimentés par une source optique commune (30) et délivrant chacun un signal optique de sortie au niveau respectivement d'un premier et d'un second détecteurs, la partie sensible de fibre optique (44) de l'un de ces deux capteurs ayant été rendue insensible à la température afin de permettre la délivrance au niveau du détecteur correspondant (48) d'un signal de référence invariable avec la température.

**20.** Dispositif de mesure de température muni de deux capteurs de température selon l'une quelconque des revendications 1 à 18, ces deux capteurs disposés l'un près de l'autre dans le milieu à surveiller étant alimentés par une source optique commune (30) et délivrant chacun un signal optique de sortie au niveau respectivement d'un premier et d'un second détecteurs, les parties sensibles de fibre optique (34, 44) de ces deux capteurs ayant des matériaux avec des coefficients de variation d'indice avec la température de signes opposés afin de permettre la délivrance au niveau des premier et second détecteurs (38, 48) de signaux optiques ayant des variations opposées avec ta température, la somme de ces deux signaux constituant un signal de référence invariable avec la température.

FIG.1

FIG.2

FIG.3

FIG.4

FIG.5

FIG.6

| Office européen des brevets | RAPPORT DE RECHERCHE EUROPEENNE | Numéro de la demande<br>EP 98 11 6774 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 151 747 A (BRANDT GERALD B ET AL) 1 mai 1979 * colonne 8, ligne 37 - colonne 11, ligne 9; figures * | 1,8-12, 15 | G01K11/32 |
| A | US 5 258 614 A (KIDWELL J JEFFREY ET AL) 2 novembre 1993 * colonne 4, ligne 32 - colonne 9, ligne 42; figures * | 1,4 | |
| A | GB 2 252 402 A (AL MOHANADI ABDUL LATIF KHALAF) 5 août 1992 * le document en entier * | 1 | |
| A | PATENT ABSTRACTS OF JAPAN vol. 006, no. 162 (P-137), 25 août 1982 -& JP 57 079416 A (MITSUBISHI ELECTRIC CORP), 18 mai 1982 * abrégé * | 1 | |
| A | PATENT ABSTRACTS OF JAPAN vol. 007, no. 075 (P-187), 29 mars 1983 -& JP 58 006431 A (NIPPON DENSHIN DENWA KOSHA), 14 janvier 1983 * abrégé * | 1,17,18 | DOMAINES TECHNIQUES RECHERCHES (Int.Cl.6) G01K |
| D,A | FR 2 664 695 A (UNIV PASTEUR) 17 janvier 1992 * le document en entier * | 1,9 | |
| A | EP 0 108 671 A (COMMISSARIAT ENERGIE ATOMIQUE) 16 mai 1984 * figure 3A * | 1 | |

Le présent rapport a été établi pour toutes les revendications

| Lieu de la recherche | Date d'achèvement de la recherche | Examinateur |
|---|---|---|
| LA HAYE | 26 janvier 1999 | Ramboer, P |

**ANNEXE AU RAPPORT DE RECHERCHE EUROPEENNE
RELATIF A LA DEMANDE DE BREVET EUROPEEN NO.**

EP 98 11 6774

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-01-1999

| Document brevet cité au rapport de recherche | | Date de publication | Membre(s) de la famille de brevet(s) | | Date de publication |
|---|---|---|---|---|---|
| US 4151747 | A | 01-05-1979 | AUCUN | | |
| US 5258614 | A | 02-11-1993 | AUCUN | | |
| GB 2252402 | A | 05-08-1992 | AUCUN | | |
| FR 2664695 | A | 17-01-1992 | AUCUN | | |
| EP 0108671 | A | 16-05-1984 | FR<br>US | 2535464 A<br>4563639 A | 04-05-1984<br>07-01-1986 |

EPO FORM P0460

Pour tout renseignement concernant cette annexe : voir Journal Officiel de l'Office européen des brevets, No.12/82